# EUROPEAN PATENT SPECIFICATION

(11) **EP 1 350 289 B1**
(45) Date of publication and mention of the grant of the patent: **22.04.2009**
(21) Application number: 01270933.3
(22) Date of filing: 21.11.2001
(51) Int. Cl.: H01S 3/067, H01S 3/10

(54) **OPTICAL WAVEGUIDE LASER COMPRISING BRAGG GRATINGS**
OPTISCHER WELLENLEITERLASER MIT BRAGG-GITTERN
LASER EN GUIDE D'ONDES OPTIQUE DOTE DE RESEAUX DE BRAGG

(30) Priority: 15.12.2000 NO 20006447
(43) Date of publication of application: 08.10.2003
(73) Proprietor: OPTOPLAN AS, 7448 Trondheim (NO)
(72) Inventor: KRINGLEBOTN, Jon, Thomas, N-7024 Trondheim (NO); LÖVSETH, Sigurd, Weidemann, N-7022 Trondheim (NO)
(74) Representative: Plougmann & Vingtoft A/S
(86) International application number: PCT/NO2001/000462
(87) International publication number: WO 2002/049169

(56) References cited:
- US-A- 5 317 576
- US-A- 5 999 546
- US-A- 6 108 470
- US-B1- 6 317 538

## Description

This invention relates to a Bragg grating optical waveguide laser source comprising two or more Bragg gratings in a rare earth doped waveguide and an optical pump source coupled to said doped fibre.

In wavelength division multiplexed (WDM) telecommunication systems as well as WDM sensing systems there is a need for wavelength selectable and/or tunable narrowband laser sources. In future dense WDM (DWDM) telecommunication systems and networks wavelength selectable lasers seem very attractive both as back-up lasers in multiwavelength laser transmitter modules and as wavelength switchable sources for wavelength routing/switching in optical networks. The first application typically requires very wide wavelength tuning such that one tunable laser can be a back-up for many fixed wavelength sources, but does normally not require very fast tuning. The latter application requires fast wavelength switching, typically <1ms. Future DWDM systems will have a large number of wavelength channels with very narrow channel spacing (50GHz or less). This requires very tight laser wavelength control combined with robust single mode laser operation with narrow linewidth (less than a few MHz) and high side-mode suppression ratio (SMSR). In addition tunable lasers should ideally provide wide tuning (>40nm) combined with high power (>20mW). There are several tunable multi-section semiconductor lasers under development which are aiming at the applications mentioned above [1]. However, these multi section lasers are complex, with up to 4 different currents required to control both wavelength and power and ensure mode-hop free single mode operation, and are difficult to make with both high power and wide tuning. A wavelength selectable, mode-hop free single mode laser with high SMSR can be realised by combine several semiconductor DFB laser cavities with different wavelengths on a single chip in a linear gain-coupled [2] or a parallel index-coupled [3] DFB array, with separate drive currents such that only one laser is pumped and oscillating at a time. All laser cavities can be temperature tuned simultaneously. Exact wavelength control of such lasers require wavelength lockers.

DFB fibre lasers are another attractive alternative for wavelength accurate, mode-hop free tunable single mode laser source, which seem able to satisfy the requirements described above. A DFB fibre laser typically consist of a phase-shifted fibre Bragg grating (FBG) written in a rare earth doped (eg. erbium doped) optical fibre, which when pumped by a semiconductor pump laser provides lasing at wavelength determined by the grating [4]. With an optical phase-shift of Φ=π/2 at the centre of the grating the round-trip phase condition of n*2π (n is an integer) of the laser cavity is satisfied at the centre (Bragg) wavelength of the grating, providing the lowest lasing threshold. Detuning the phase-shift away from the optimum value of π/2 will increase the threshold and possibly prevent laser operation [4]. The wavelength of a DFB fibre laser can be set with great accuracy and repeatability in the writing of the grating, and with proper annealing the wavelength remains stable over time. DFB fibre lasers will inherently operate at two polarisations, but single-polarisation operation can be obtained for example by making a grating with differential strength for the two polarisation states. The temperature sensitivity of the laser wavelength is one order of magnitude lower than of a semiconductor DFB laser, relaxing the requirements on temperature stabilisation. The wavelength of a DFB fibre laser can be tuned continuously without mode-hopping through uniform strain/compression and/or temperature tuning of the whole laser cavity [5], [6]. Such mechanical or thermal tuning is relatively slow (typically > 0.1s). The tuning range with temperature is typically <1-2nm due to the low temperature sensitivity. Strain/compression tuning allows tuning over typically 5-15nm, mainly limited by the mechanical reliability of the fibre. Good control of strain/compression and temperature can provide highly accurate wavelength control without the need for closed loop control and wavelength lockers. Note that DFB fibre laser can not be directly modulated at telecommunication speeds due to the slow gain medium, and require external modulators.

A wavelength selectable fibre laser has been demonstrated using a laser cavity comprising a widely tunable filter based reflector combined with a series of FBG reflectors [7]. A wavelength selectable fibre laser system can also be made by pumping several lasers having different wavelengths with one optical pump source, where lasing at one wavelength at a time can be realised by having an optical switch between the pump source and the fibre lasers [8].

Continuously wavelength swept mode-hop free and narrow linewidth lasers are very attractive for high resolution, fast spectral characterisation of wavelength dependent optical components such as FBG filters.

### Objective

The objective with the present disclosure is to provide a single longitudinal mode fibre laser which can perform rapid wavelength switching between two or more wavelengths, with switching times <1ms. A second objective is to provide a robustly, mode-hop free single longitudinal mode fibre laser which can be tuned to any wavelength within a wide wavelength band, requiring only two tuning control parameters. A third objective is to provide a narrow linewidth (<1MHz) laser which can be continuously wavelength swept to measure the spectral characteristics of wavelength dependent optical components at any wavelength across a wide wavelength range. A forth objective is to provide a laser source which can provide lasing at more than one wavelength with control of the number of lasing wavelengths and where these wavelengths can be continuously tuned.

### Invention

The invention is defined in claim 1. Various embodiments are defined in the dependent claims.

The objectives can be met by having several fully/partly spatially overlapping DFB fibre lasers in the same rare-earth doped fibre with different grating pitch and different phase-shift, pumped by one or more optical pump sources, which are typically a semiconductor laser. The DFB laser gratings can be written overlaid (one by one), or as a complex sampled grating with an index profile equal to a sum of the individual laser gratings. All the lasers have the same phase-shift position, but with different induced central phase-shifts φ₀ᵢ (i = 1,2,..n, where n is the number of lasers) such that only one laser at the time has an optimum total phase-shift φ = π/2 ± δφ where 2δφ is the range of phase-shift providing acceptable lasing conditions. The individual lasers can be turned on by changing the phase-shift of that particular laser by a controlled amount φ. The change in phase-shift can be introduced by local heaters or PZT stretchers, or by locally induced changes in refractive index (using for example an electro-optically active poled fibre). In a preferred embodiment all overlaid lasers have the same phase-shift position in the fibre, but have different inherent phase-shifts, such that for a given induced phase-shift only one laser is oscillating at a time, having a total phase-shift of Φ = π/2 ± δφ, while the other lasers have phase-shifts outside this range, and hence threshold levels too high to provide lasing. Typically, but not necessarily, the difference in peak reflection wavelength of the Bragg grating, hereafter called Bragg wavelength (grating pitch) between the individual DFB fibre lasers is so large that the reflection spectrum associated with the individual lasers have no spectral overlap. Changing the phase-shift will then allow switching between laser wavelengths separated by typically the separation between the Bragg wavelengths of the individual laser gratings. The speed of this switching will be limited i) by how fast the correct phase-shift can be introduced in the core of the fibre, and ii) by the laser cavity lifetime, which is typically 0.1-1µs. By making the laser wavelengths matching selected ITU wavelength, fast switching between ITU wavelength channels can be realised.

In a second embodiment the phase-shifts for the individual DFB fibre lasers have different positions with individual phase-control (with eg. heaters or stretchers) such that each laser can be turned on/off individually. This can provide lasing at one or more laser wavelengths simultaneously.

The objectives can also be met by having non-overlapping or partially overlapping DFB fibre lasers with different grating pitch, either written in the same fibre or in separate fibres, where the phase-shifts of each laser can be tuned/switched independently to turn the lasers on/off independently.

Each laser wavelength can be tuned continuously by straining/compressing (or heating/cooling) the laser, enabling tuning over typically Δλ=5-15nm. Combining the tuning range of the individual lasers with wavelength spacing Δλ allows tuning over m*Δλ, where m is the number of DFB fibre lasers, where typically only one laser is lasing at a time. An important advantage of the approach is that all lasers can be strained/compressed simultaneously using the same actuator, reducing the volume and complexity of the combined laser array. To cover a widest possible tuning range one can either have a large number (m) of lasers, or make the lasers with a large wavelength spacing Δλ, which still will allow mechanical tuning over the wavelength range Δλ.

The laser wavelength can be tuned to any wavelength within the total tuning range by controlling only two parameters, the strain/compression of the laser cavity and the induced phase-shift. This will require the temperature of the laser to be measured such that the induced strain/compression can compensate for temperature induced changes in wavelength. Alternatively passive, mechanical temperature compensation can be used to eliminate temperature induced wavelength shifts.

Alternatively the laser(s) can be operated in a wavelength sweep mode for spectral characterisation of optical components using a detector to measure the reflected or transmitted spectral power of the optical component. In the latter case normally only the wavelength range corresponding to one of the lasers can be covered at a time with continuos wavelength tuning. The combined wavelength range m*Δλ can be covered by doing the first sweep with only the first laser on, the second sweep with only the second laser on, and so on. Several wavelength ranges can be covered simultaneously be operating several lasers in on-mode simultaneously and separate the wavelength scans with a wavelength demultiplexer having separate detectors at the output.

The laser wavelength can be controlled prior to the onset of the individual lasers by either measuring the strain/compression with a capacitance positioning sensor and the temperature with a temperature sensor, or alternatively by measuring the combined effect of strain/compression and temperature with an FBG sensor imprinted in the strained/compressed fibre section [Norwegian patent application 1999.5485]. The phase-shift of each laser can be set to the correct magnitude by introducing a pre-determined local increase in refractive index and/or strain at the centre of the grating, or alternatively by tuning the phase-shift to maximise the output power using a feedback loop.

The invention will be described in detail below with reference to the accompanying drawings, illustrating the invention by way of examples.
- Fig. 1: shows three overlaid DFB fibre lasers having the same phase-shift position but different phase- shifts.
- Fig. 2: illustrates schematically the wavelength spectrum of three overlaid DFB fibre lasers having the same phase-shift position, with tuning of the induced central phase-shift φ combined with strain/comp- ression tuning, and with only one laser lasing at a time.
- Fig. 3: illustrates schematically the reflection spectra of three overlaid DFB fibre lasers having the same phase-shift position, with different phase-shifts.
- Fig. 4: shows the calculated output power from five overlaid Er³⁺-doped DFB fibre lasers with 5nm wavelength spacing as a function of the induced central phase-shift φ, where only one laser is lasing at a time.
- Fig. 5: shows three partially overlaid DFB fibre lasers having separated phase-shift positions and common strain/compression tuning.
- Fig. 6A: illustrates schematically the wavelength spectrum of three partially overlaid DFB fibre lasers, having separated phase-shift positions, with tuning of the phase-shifts combined with strain/compression tuning, and with only one laser lasing at a time.
- Fig. 6B: illustrates schematically the wavelength spectrum of three partially overlaid DFB fibre lasers, having separated phase-shift positions, with tuning of the phase-shifts such that one to three lasers are lasing at a time.
- Fig. 7: shows three serially multiplexed (single or overlaid) DFB fibre lasers along the same fibre with individual phase-shift and strain/compression control.
- Fig. 8A: shows three parallel multiplexed (single or overlaid) DFB fibre lasers along the same fibre with individual phase-shift control and common strain/compression control.
- Fig. 8B: shows three parallel multiplexed (single or overlaid) DFB fibre lasers in separate fibres with individual phase-shift control and common strain/compression control.
- Fig. 9A and B: illustrates schematically the wavelength tuning operation of a wavelength swept DFB fibre laser array (overlaid or separate).

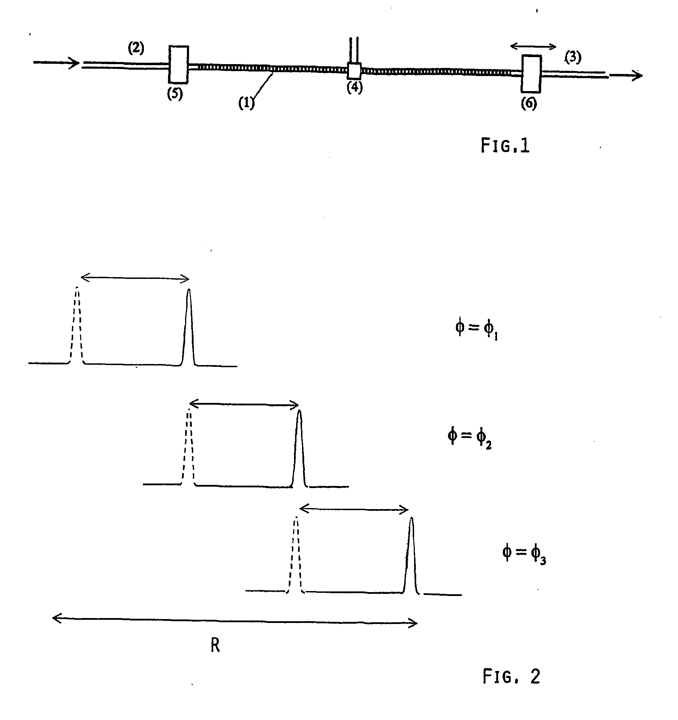

Fig. 1 shows n overlaid DFB fibre lasers 1 with different Bragg wavelengths in a rare-earth doped fibre, which can be an erbium or erbium-ytterbium doped fibre, which is pumped by an optical pump source, typically a semiconductor laser, through an input end 2 and emitting single mode, single wavelength laser light at output end 3 and also from end 2. Typically the lasers are made asymmetric such that most of the laser light is emitted from one end. This is standard technique and will not be described in any further detail here.

The lasers have the same phase-shift position but different inherent (UV-induced) phase-shifts. With the output from end 3 the residual pump light can be used to pump an amplifying fibre (eg. erbium) to boost the laser power. All laser gratings have different phase-shifts at the same position in the fibre, with values such that none or only one laser is lasing when pumped. The phase-shift at the centre can be changed by means of a first actuator, here called the phase-shift actuator, e.g. comprising a local heater or stretcher 4, which can be tuned electrically such that the total phase-shift is correct for any of the individual lasers, but only for one laser at a time. This allow the wavelength to be switched between the different Bragg wavelengths of the overlaid DFB fibre lasers. All laser Bragg) wavelengths can be tuned simultaneously by straining or compressing the whole laser grating, for example by fixing each end of the laser at fixing points 5,6, and moving 6 mechanically with a second actuator mechanism, for the purpose of this text called wavelength actuator. The phase-shift actuator can be a stepper motor, a piezoelectric transducer or a magnetic force transducer.

The waveguide shown in the drawings is referred to as an optical fibre, but it is evident that the invention also applies to waveguides of other types, such as planar optical waveguides. The phase-shift actuator may also be of other types than mentioned above, e.g. means for altering the refractive index of the fibre.

Such tuning provide continuous, mode-hop free tuning of the individual lasers such that any wavelength within the combined tuning range of the lasers can be reached, as illustrated in Fig. 2 for the case of three overlaid DFB fibre lasers, where only one laser is lasing at a time by controlling the central phase-shift Φ. Accurate wavelength setting can be provided by changing the wavelength actuator force on the fibre and measuring the fibre strain and temperature. The total tuning range R is thus the sum og the three illustrated ranges. A larger number of lasers may of course also be applied.

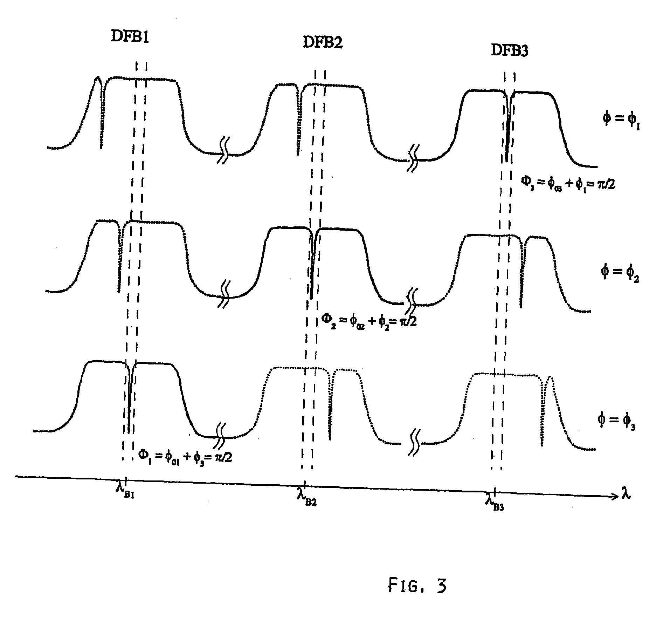

Fig. 3 illustrates schematically the reflection spectra of three overlaid DFB fibre lasers with different Bragg wavelengths λ_{Bi} (where i is the number of the laser) and non-overlapping spectra. The lasers have the same phase-shift position, but with different induced central phase-shift φ, such that only one laser at a time has an optimum total phase-shift φ=π/2±δφ), where 2δφ is the range of phase-shift providing acceptable lasing conditions. When Φ=π/2 the reflection spectrum has a sharp dip (resonance) at the Bragg (centre) wavelength. When Φ is detuned from π/2 the dip is moving away from the Bragg wavelength, and the laser threshold will increase such that lasing might not be reached.

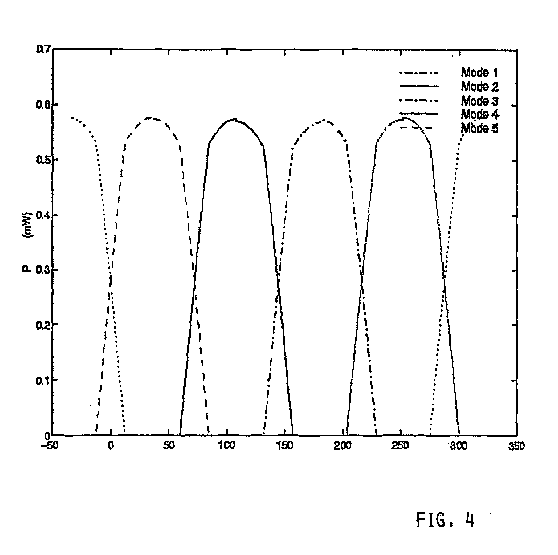

Fig. 4 shows the calculated output power P in mW from five fully overlaid Br³⁺-doped DFB fibre as a function of the induced central phase-shift φ, where only one laser is lasing at a time. The difference in Bragg wavelength between the individual lasers is 5nm. The difference in initial phase-shift φ₀ between the individual lasers is 72° (=360°/5). The laser length is 10cm and the fibre small signal absorption and gain at the laser wavelength are 12dB/m and 16dB/m, respectively. The grating coupling strength K = πδn_{eff}/λ of each laser is 55m⁻¹, corresponding to an effective index modulation δn_{eff} for each laser of 2.75*10⁻⁴, while the threshold coupling strength is 47.5m⁻¹. The maximum index modulation of 5 overlaid lasers is 5*δn_{eff} = 1.4*10⁻⁴. If the overlaid DFBs can be strained or compressed by 0.5%, corresponding to a 6nm shift in Bragg wavelength, a total tuning range of 30nm can be obtained.

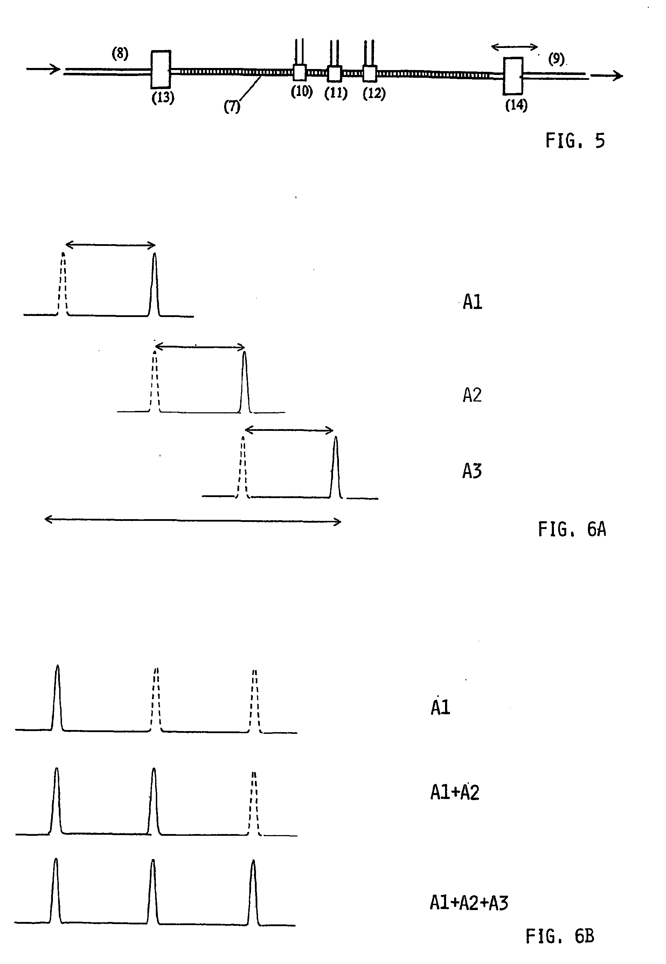

Fig. 5 shows three partly overlaid DFB fibre lasers 7 with different Bragg wavelengths in a rare-earth doped fibre, which is pumped by an optical pump source through an input end 8 and emitting laser light at an output end 9 and also from end 8. All laser gratings have different phase-shifts at different positions along the fibre. The phase-shifts of the individual lasers can be changed by means of a local heaters or stretchers 10,11,12, which can be tuned electrically such that the total phase-shift is correct for any of the individual lasers and such that one or more than one laser can lase at a time. All laser (Bragg) wavelengths can be tuned simultaneously by straining or compressing the whole laser grating, for example by fixing each end of the laser at fixing points 13,14, and moving 14 mechanically with the wavelength actuator mechanism. This laser configuration can allow tunable single wavelength operation, as illustrated in Fig. 6A, ilustrating the wavelength scan with a first, second and third phase-shift actuators A1, A2, A3, respectively operative, or multi-wavelength operation as illustrated in Fig. 6B, by separately controlling all heaters/stretchers individually and thus using the phase-shift actuators A1, A2, A3 for activating the lasers at the different wavelengths separately.

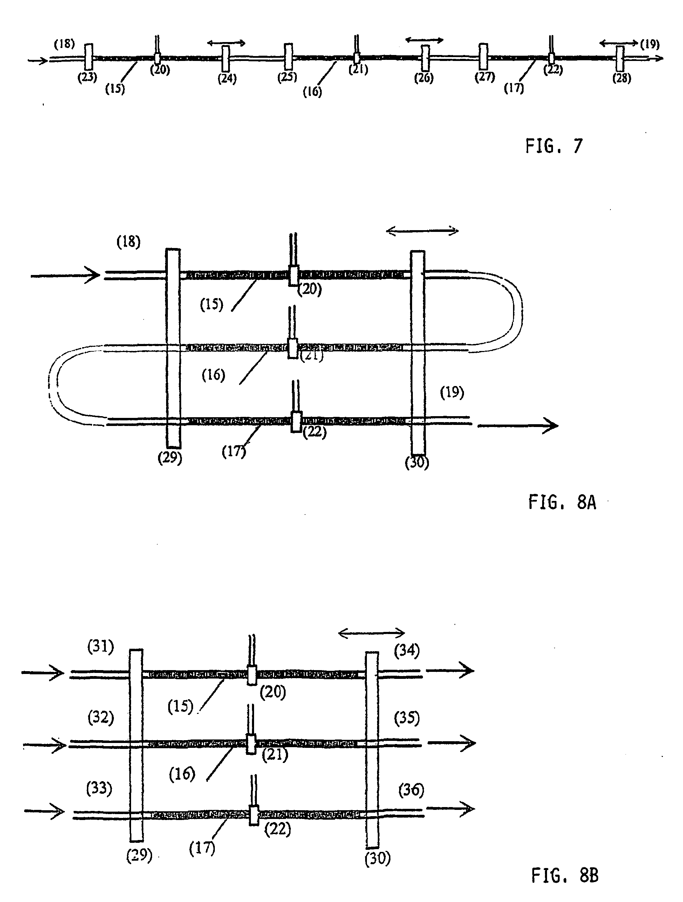

Fig. 7 illustrates three serially multiplexed, non-overlapping DFB fibre lasers 15,16,17 with different Bragg wavelengths in a rare-earth doped fibre, which is pumped by an optical pump source through an input end 18 and emitting laser light at an output end 19 and also from end 18.

Each DFB fibre laser 15,16,17 can in principle be a series of overlaid lasers, as illustrated in Fig. 1. Each laser has individual phase-shift control by local heater/stretchers 20,21,22, which can be tuned electrically such that the total phase-shift is correct for any of the individual lasers and such that one or more than one laser can lase at a time, providing multi-wavelength operation in one single fibre. All laser wavelengths can be tuned independently by straining or compressing the lasers, for example by fixing each end of the lasers 15,16,17 at fixing points 23,24, 25,26, and 27,28, respectively, and moving 24,26,28 mechanically with a wavelength actuator mechanism.

Fig. 8A illustrates three serially multiplexed, non-overlapping DFB fibre lasers 15,16,17 with different Bragg wavelengths in a rare-earth doped fibre, which is pumped by an optical pump source through an input end 18 and emitting laser light at output end 19 and also from end 18. Each DFB fibre laser 15,16,17 can in principle be a series of overlaid lasers, as illustrated in Fig. 1. Each laser has individual phase-shift control by local heater/stretchers 20,21,22, which can be tuned electrically such that the total phase-shift is correct for any of the individual lasers and such that one or more than one laser can lase at a time, providing multi-wavelength operation in one single fibre. All laser wavelengths can be continuously tuned simultaneously by straining or compressing all lasers with the same wavelength actuator mechanism, where all lasers are fixed at each end at fixing members 29,30, and moving 30 mechanically with the actuator.

Fig. 8B illustrates three parallel DFB fibre lasers 15,16,17 with different Bragg wavelengths in separate rare-earth doped fibres, which are pumped by a common optical pump source via an optical switch or splitter, or by separate pump sources, through input ends 31,32,33, and emitting laser light at the output ends 34, 35, 36, and also from ends 31,32,33. The output laser light from the different fibres can be coupled together into one fibre by means of a coupler or a wavelength multiplexer. Each DFB fibre laser 15,16,17 can in principle be a series of overlaid lasers, as illustrated in Fig. 1. Each laser has individual phase-shift control by local heater/stretchers 20,21,22, which can be tuned electrically such that the total phase-shift is correct for any of the individual lasers and such that one or more than one laser can lase at a time. All laser wavelengths can be tuned simultaneously by straining or compressing all lasers with the same actuator mechanism, where all lasers are fixed at each end at fixing members 29,30, and moving 30 mechanically with the wavelength actuator.

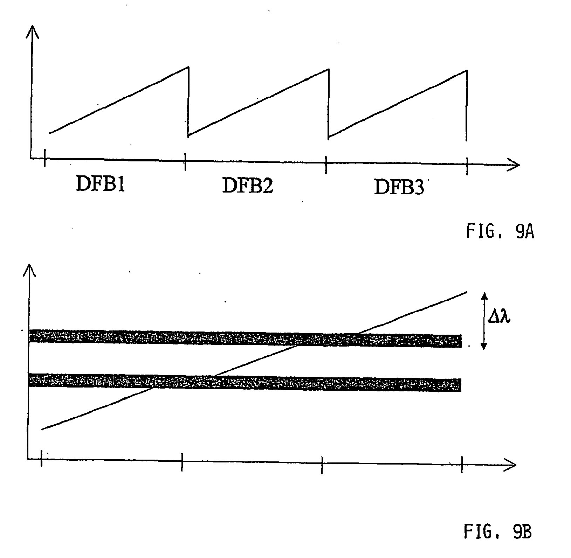

Fig. 9 illustrates schematically the wavelength tuning operation of a wavelength swept DFB fibre laser array (overlaid or separate) with three lasers, Fig. 9A illustrating the fibre strain on each laser as a function of time, and Fig. 9B illustrating the resulting output wavelength in the same time scale, the shaded areas representing the overlap between to lasers. The combined wavelength range m*Δλ (m = 3) can be covered by doing the first sweep with only the first laser on, the second sweep with only the second laser on, the third sweep with only the third laser on, and so on. Normally the individual tuning ranges will have some overlap, as illustrated in the figure. The tuning will be continuous and mode-hop free within each individual tuning range, while there will be some jump between each tuning range. This is normally acceptable for characterisation of narrowband passive DWDM components.

### References:

[1] Amman, M.-C., and Buus, J., Tunable Laser Diodes, Artech House, London, 1998.
[2] Hong, J., et.al., "Cascaded strongly gain-coupled (SGC) DFB lasers with 15-nm continuously-wavelength tuning," IEEE Photon. Technol. Lett., Vol. 11, pp. 1214-1216, 1999.
[3] Young, M.G., et.al., "Six wavelength laser array with integrated amplifier and modulator," Electron. Lett., Vol. 31, pp. 1835-1836, 1995.
[4] Kringlebotn, J. T., Archambault, J.-L., Reekie, L., and Payne, D.N, "Er3+:Yb3+-codoped fibre distributed-feedback laser," Optics Letters, Vol. 19, pp. 2101-2104, 1994, and US patent 5,771,251.
[5] Ball, G., and Morey, W. W., Opt. Lett., Vol. 17, pp. 420-422, 1992.
[6] Kringlebotn, J. T., US patent 5,844,927.
[7] Libatique, N. J. C. and Jain, R. K., "Pricisely and rapidly wavelength-switchable narrow-linewidth 1.5-µm laser source for wavelength division multiplexing applications," IEEE Photon. Technol. Lett., Vol. 11, pp. 1584-1586, 1999.
[8] Conradi, J., US patent 6,061,369.

## Claims

1. A Bragg grating optical waveguide laser source (1) comprising at least two fully-, or partly- or non-overlapping Bragg gratings in the same waveguide, each grating defining one DFB laser in a rare earth doped waveguide or waveguide section, and an optical pump source coupled to said doped waveguide or waveguide section,
said at least two Bragg gratings having different grating wavelengths and corresponding phase-shifts,
wherein the laser source further comprises a first actuator means (4) for the application of changes in the phase-shift thus activating or deactivating the corresponding Bragg grating DFB laser.

2. A laser source according to claim 1, wherein the phase-shifts are located at a common position in the waveguide and the first actuator means is located at said common position of the phase-shifts for the application of said changes in the phase-shifts thus activating or deactivating the corresponding Bragg grating waveguide lasers.

3. A laser source according to claim 2, wherein the first actuator means is provided with means for altering the temperature locally in said phase-shifts, thus providing a change in the phase-shifts.

4. A laser source according to claim 2, wherein the first actuator means is provided with means for providing a strain or stress in the waveguide, and thus a change in the phase-shifts.

5. A laser source according to claim 2, wherein the first actuator means is provided with means for altering the refractive index of the waveguide, and thus a change in the phase-shifts.

6. A laser source according to claim 1, wherein the phase-shifts are different, such that only one laser at a time has a total phase-shift for yielding lasing conditions.

7. A laser source according to claim 1, wherein the Bragg gratings are overlaid in the same length of waveguide, being written separately or as one complex sampled grating with an index profile equal the sum of two or more individual gratings.

8. A laser source according to claim 1, wherein the Bragg gratings are separated or partially overlapping , each' grating having separate phase-shifts each being provided with a separate actuator means, thus providing means for individual activation of each grating.

9. A laser source according to any of claims 1 to 8, further comprising a second actuator means for the application of changes in at least one grating and the corresponding grating wavelength.

10. A laser source according to claim 9, wherein the second actuator means comprises a wavelength actuator means being common for two or more Bragg gratings.

11. A laser source according to claim 9 or 10, wherein the second actuator means is provided with means for altering the temperature of at least one of the gratings, thus providing a change in at least one of the grating wavelengths.

12. A laser source according to claim 10, wherein the second actuator means is provided with means for altering the strain or compression of at least one of the gratings, thus providing a change in at least one of the grating wavelengths.

13. A laser source according to any of claims 9 to 12, wherein the second actuator means is adapted to provide a wavelength sweep by continuously varying the strain/compression or temperature of the gratings.

14. A laser source according to any of claims 1 to 13, wherein the output of the laser is monitored by an analysing means and wherein the first and/or second actuator means is coupled to said analysing means.

15. A laser source according to any of claims 1 to 14, wherein the wavelenghts of the gratings correspond to chosen wavelengths in an optical communication network, said first actuator means providing means for shifting between said chosen wavelengths.

16. A laser source according to any of claims 1 to 15, wherein the first and/or (where provided) the second actuator means are arranged for controlled application of said changes.

17. Use of a laser source according to any of claims 9 to 16 for spectral characterization of optical components comprising a detector for measuring the transmitted or reflected spectral power of the optical component.

## Revendications

1. Source laser à guide d'ondes optique à réseaux de Bragg (1) comprenant au moins deux réseaux de Bragg se chevauchant entièrement, en partie ou pas du tout dans le même guide d'ondes, chaque réseau définissant un laser DFB dans un guide d'ondes ou une section de guide d'ondes dopé(e) aux terres rares, et une source de pompe optique couplée audit guide d'ondes ou à ladite section de guide d'ondes dopé(e),
lesdits au moins deux réseaux de Bragg ayant différentes longueurs d'onde de réseau et les décalages de phase correspondants,
dans laquelle la source laser comprend en outre un premier moyen d'actionnement (4) pour l'application de changements dans le décalage de phase, activant ou désactivant ainsi le laser DFB à réseau de Bragg correspondant.

2. Source laser selon la revendication 1, dans laquelle les décalages de phase sont situés dans une position commune dans le guide d'onde et le premier moyen d'actionnement est situé au niveau de ladite position commune des décalages de phase pour l'application desdits changements dans les décalages de phase, activant ou désactivant ainsi les lasers à guide d'ondes à réseau de Bragg correspondants.

3. Source laser selon la revendication 2, dans laquelle le premier moyen d'actionnement est muni d'un moyen pour modifier la température localement dans lesdits décalages de phase, ce qui permet un changement dans les décalages de phase.

4. Source laser selon la revendication 2, dans laquelle le premier moyen d'actionnement est muni d'un moyen pour fournir un effort ou une contrainte dans le guide d'ondes, et donc un changement dans les décalages de phase.

5. Source laser selon la revendication 2, dans laquelle le premier moyen d'actionnement est muni d'un moyen pour modifier l'indice de réfraction du guide d'ondes, et donc un changement dans les décalages de phase.

6. Source laser selon la revendication 1, dans laquelle les décalages de phase sont différents, de telle sorte qu'un seul laser à la fois a un décalage de phase total pour produire des conditions d'amorçage du laser.

7. Source laser selon la revendication 1, dans laquelle les réseaux de Bragg se chevauchent sur la même longueur de guide d'ondes, étant écrits séparément ou sous forme de réseau échantillonné complexe unique avec un profil d'indice égal à la somme de deux réseaux individuels ou plus.

8. Source laser selon la revendication 1, dans laquelle les réseaux de Bragg sont séparés ou se chevauchent en partie, chaque réseau ayant des décalages de phase distincts, chacun étant muni d'un moyen d'actionnement distinct, fournissant ainsi un moyen pour l'activation individuelle de chaque réseau.

9. Source laser selon l'une quelconque des revendications 1 à 8, comprenant en outre un second moyen d'actionnement pour l'application des changements dans au moins un réseau et la longueur d'onde de réseau correspondante.

10. Source laser selon la revendication 9, dans laquelle le second moyen d'actionnement comprend un moyen d'actionnement de longueur d'onde qui est commun pour deux réseaux de Bragg ou plus.

11. Source laser selon la revendication 9 ou 10, dans laquelle le second moyen d'actionnement est muni d'un moyen pour modifier la température d'au moins un des réseaux, ce qui permet un changement dans au moins une des longueurs d'onde de réseau.

12. Source laser selon la revendication 10, dans laquelle le second moyen d'actionnement est muni d'un moyen pour modifier l'effort ou la compression d'au moins un des réseaux, ce qui permet un changement dans au moins une des longueurs d'onde de réseau.

13. Source laser selon l'une quelconque des revendications 9 à 12, dans laquelle le second moyen d'actionnement est adapté pour fournir un balayage de longueur d'onde en faisant varier de façon continue l'effort/compression ou la température des réseaux.

14. Source laser selon l'une quelconque des revendications 1 à 13, dans laquelle la sortie du laser est contrôlée par un moyen d'analyse et dans laquelle le premier et/ou le second moyen d'actionnement est couplé audit moyen d'analyse.

15. Source laser selon l'une quelconque des revendications 1 à 14, dans laquelle les longueurs d'onde des réseaux correspondent aux longueurs d'onde choisies dans un réseau de communication optique, ledit premier moyen d'actionnement fournissant un moyen de transfert entre lesdites longueurs d'onde choisies.

16. Source laser selon l'une quelconque des revendications 1 à 15, dans laquelle le premier et/ou (le cas échéant) le second moyen d'actionnement sont agencés pour l'application contrôlée desdits changements.

17. Utilisation d'une source laser selon l'une quelconque des revendications 9 à 16 pour la caractérisation spectrale de composants optiques comprenant un détecteur pour mesurer la puissance spectrale transmise ou réfléchie du composant optique.

## Patentansprüche

1. Bragg-Gitter-Lichtwellenleiter-Laserstrahlquelle (1), die mindestens zwei völlig überlappende oder teilweise überlappende oder nicht-überlappende Bragg-Gitter im gleichen Wellenleiter umfasst, wobei jedes Gitter einen DFB-Laser in einem seltenerddotierten Wellenleiter oder Wellenleiterabschnitt und eine optische Pumpenquelle, die mit dem dotierten Wellenleiter oder Wellenleiterabschnitt verbunden ist, definiert,
wobei mindestens zwei Bragg-Gitter verschiedene Gitterwellenlängen und entsprechende Phasenverschiebungen haben,
worin die Laserstrahlquelle ferner ein erstes Aktuatormittel (4) zum Einsatz von Veränderungen in der Phasenverschiebung umfasst, wobei der entsprechende Bragg-Gitter-DFB-Laser aktiviert oder desaktiviert wird.

2. Laserstrahlquelle nach Anspruch 1, worin sich die Phasenverschiebungen an einer gemeinsamen Position im Wellenleiter und das erste Aktuatormittel an dieser gemeinsamen Position der Phasenverschiebungen befinden zum Einsatz der Veränderungen in den Phasenverschiebungen, wobei die entsprechenden Bragg-Gitter-Wellenleiterlaser aktivieret oder desaktivieret werden.

3. Laserstrahlquelle nach Anspruch 2, worin das erste Aktuatormittel mit Mitteln zur Veränderung der Temperatur an einer lokalen Stelle in den Phasenverschiebungen ausgerüstet ist, wobei eine Änderung bei den Phasenverschiebungen herbeigeführt wird.

4. Laserstrahlquelle nach Anspruch 2, worin das erste Aktuatormittel mit Mitteln zur Herstellung einer Beanspruchung oder Belastung im Wellenleiter ausgerüstet ist, wobei eine Änderung bei den Phasenverschiebungen herbeigeführt wird.

5. Laserstrahlquelle nach Anspruch 2, worin das erste Aktuatormittel mit Mitteln zur Veränderung des Brechungsindex des Wellenleiters ausgerüstet ist, wobei eine Änderung bei den Phasenverschiebungen herbeigeführt wird.

6. Laserstrahlquelle nach Anspruch 1, worin die Phasenverschiebungen unterschiedlich sind, sodass nur jeweils ein Laser eine gesamte Phasenverschiebung zum Erzeugen von Laserbedingungen hat.

7. Laserstrahlquelle nach Anspruch 1, worin die Bragg-Gitter in der gleichen Wellenleiterlänge überlagert sind, wobei sie separat oder als komplex erprobtes Gitter mit einem Indexprofil, das der Summe zweier oder mehrerer individuellen Gitter entspricht, gelesen werden.

8. Laserstrahlquelle nach Anspruch 1, worin die Bragg-Gitter getrennt sind oder sich teilweise überlappen, wobei jedes Gitter separate Phasenverschiebungen hat, die jeweils mit einem separaten Aktuatormittel ausgerüstet sind, wobei Mittel zur individuellen Aktivierung jedes Gitters herbeigeführt werden.

9. Laserstrahlquelle nach irgendeinem der Ansprüche 1 bis 8, weiterhin umfassend ein zweites Aktuatormittel zum Einsatz von Änderungen in mindestens einem Gitter und der entsprechenden Gitterwellenlänge.

10. Laserstrahlquelle nach Anspruch 9, worin das zweite Aktuatormittel ein Wellenlängenaktuatormittel umfasst, das für zwei oder mehrere Bragg-Gitter gemeinsam ist.

11. Laserstrahlquelle nach Anspruch 9 oder 10, worin das zweite Aktuatormittel mit Mitteln zur Veränderung der Temperatur von mindestens einem der Gitter ausgerüstet ist, wobei eine Änderung in mindestens einer der Gitterwellenlängen herbeigeführt wird.

12. Laserstrahlquelle nach Anspruch 10, worin das zweite Aktuatormittel mit Mitteln zur Veränderung der Beanspruchung oder Belastung von mindestens einem der Gitter ausgerüstet ist, wobei eine Änderung in mindestens einer der Gitterwellenlängen herbeigeführt wird.

13. Laserstrahlquelle nach irgendeinem der Ansprüche 9 bis 12, worin das zweite Aktuatormittel dafür eingerichtet ist, eine Wellenlängenvariation durch kontinuierliches Variieren der Beanspruchung/Kompression oder der Temperatur der Gitter herbeizuführen.

14. Laserstrahlquelle nach irgendeinem der Ansprüche 1 bis 13, worin die Laserleistung durch ein Analysierungsmittel überwacht wird, und worin das erste und/oder zweite Aktuatormittel mit dem Analysierungsmittel verbunden ist/sind.

15. Laserstrahlquelle nach irgendeinem der Ansprüche 1 bis 14, worin die Wellenlängen der Gitter gewählten Wellenlängen in einem optischen Kommunikationsnetz entsprechen, wobei das erste Aktuatormittel Mittel zum Wechseln zwischen den gewählten Wellenlängen herbeiführt.

16. Laserstrahlquelle nach irgendeinem der Ansprüche 1 bis 15, worin das erste und/oder (wenn vorhanden) zweite Aktuatormittel für den kontrollierten Einsatz der Änderungen eingerichtet ist/sind.

17. Anwendung einer Laserstrahlquelle nach irgendeinem der Ansprüche 9 bis 16 zur spektralen Kennzeichnung von optischen Komponenten, die einen Detektor zum Messen der übermittelten oder reflektierten spektralen Leistung des optischen Komponenten umfassen.
